# EUROPEAN PATENT APPLICATION

(11) **EP 3 771 820 A1**
(43) Date of publication of application: **03.02.2021**
(21) Application number: 19189834.5
(22) Date of filing: 02.08.2019
(51) Int. Cl.: F03D 13/10, F03D 9/25

(54) **HANDLING A COMPONENT OF A WIND TURBINE INSTALLATION**

(71) Applicant: youWINenergy GmbH, 27568 Bremerhaven (DE)
(72) Inventor: ROHDEN, Rolf, 26607 Aurich (DE)
(74) Representative: Bird & Bird LLP

(57) **Abstract**

Wind turbine installation comprising a generator having a stator (2) and a rotor (4), the generator's rotor (4) being arranged to rotate about an axis A on the stator, the stator limiting a first cavity (D) extending along axis A, a first platform (2000) extending inside the first cavity, wherein an outer surface of the first platform extends essentially in parallel with axis A or is arranged horizontally, a hoist support structure (2100) arranged to support an independent hoist, wherein the hoist support structure is mechanically connected with the first platform and/or with the stator, and extends inside the first cavity.

## Description

The present invention relates to handling a component of a wind turbine installation, particularly to devices to simplify component handling.

Usually, a wind turbine installation has a nacelle rotatably supported on a tower, a generator arranged to provide electrical power and a turbine rotor with a rotor hub and pitchable blades arranged to drive the generator. In recent years wind turbine installations have been built with increasing electrical output. Many of their components have become larger and heavier.

### Problem and solution

During operation of a wind turbine installation some of its components wear and need to receive maintenance or may have to be replaced. Due the dimensions and weight of key components, i.e. generator, gear box and rotor blades, higher capacity mobile cranes and special handling equipment are required during repeated maintenance. The availability of such maintenance equipment is limited which can lead to longer downtimes. On the other hand, the cost of higher capacity maintenance equipment and the time required to bring these to an installation site increases with the electrical output of the wind turbine installation.

It is one object to reduce the operating cost of a wind turbine installation.

The object is achieved by a wind turbine installation (first aspect) comprising a generator having a stator and a rotor. The generator's rotor is arranged to rotate about an axis A on, inside or about the stator. The stator limits a first cavity extending along axis A, preferably of essentially cylindrical shape. Further, the installation comprises a first platform extending inside the first cavity, wherein an outer or upper surface of the first platform extends essentially in parallel with axis A or is arranged horizontally. The installation has a (first) hoist support structure which is arranged to support an independent hoist. The hoist support structure is mechanically connected with the first platform and/or with the stator, and extends inside the first cavity.

The object is also achieved by a wind turbine installation (second aspect) comprising a rotor hub arranged to rotate about an axis A and limiting a second cavity and a (second) hoist support structure arranged to support an independent hoist. The hoist support structure extends inside the second cavity essentially in parallel with axis A.

Further, the object is achieved by a wind turbine installation (third aspect) comprising a rotor hub arranged to rotate about an axis A and limiting a second cavity (E) and a pitch housing which is arranged to house a pitch motor, a pitch bearing and/or a pitch brake. The pitch housing limits a third cavity and extends from the rotor hub, such that the second and third cavities form a common space. Additionally, the installation has a (third) hoist support structure arranged to support an independent hoist, wherein the hoist support structure extends inside the third cavity. The pitch housing can be arranged to rotatably support a rotor blade of the turbine rotor. The wind turbine installation can have two, three or more pitch housing each arranged to rotatably support a rotor blade.

Usually, a nacelle has a rear hatch and a hoist supported by the nacelle can lift a component of the wind turbine installation from the ground through the hatch and into the nacelle. Each of the above hoist support structures permits to move a pitch motor, a pitch bearing and/or a pitch brake of a wind turbine installation towards its destination in the vicinity of the rotor hub or towards the third cavity. Replacing a heavier component or subjecting it to maintenance can be done without a higher capacity mobile crane and special handling equipment. This can help to reduce cost of maintenance and/or downtime, whereby the object can be solved.

The wind turbine installation according to the third aspect may offer the further advantage, that a rotor blade can lifted from the ground directly to the pitch housing intended to support it rotatably.

Rotating the nacelle about its rotational axis (yawing) can be achieved by a yaw motor, a yaw bearing and a yaw brake. A stator of the yaw motor, a stationary race of the yaw bearing and/or a component of the yaw brake can be mechanically connected with the tower. The rotor of the yaw motor, a rotatable race of the yaw bearing and/or another component of the yaw brake can be mechanically connected with the nacelle.

One or more of the following major components of the wind turbine installation have several segments: bearings arranged to support the generator's rotor rotatably, bearings arranged to support the rotor hub rotatably, generator's rotor, generator's stator, yaw motor, yaw brake, yaw bearing, pitch motor, pitch bearing, pitch brake, electrical cabinets. Each of these segments, which need to be mechanically connected to form the respective component, is lighter than the component and preferably less than 2000kg. In combination with one of the above hoist support structures there is no need of using ground based higher capacity crane to repair or refurbish above said major components of the wind turbine installation (craneless operation). By the segmented major components inventory cost can be reduced.

### Preferred embodiments

Preferred embodiments explained in the following can be combined with each other, advantageously, unless stated otherwise.

The first platform can be mechanically connected with the nacelle or its nacelle platform explained below.

A preferred wind turbine installation comprises a first hoist support structure extending inside the first cavity limited by the generator's stator, a second hoist support structure extending inside the second cavity limited by the rotor hub and a third hoist support structure extending inside the third cavity limited by the pitch housing. This can help to move a component through the first and second cavities into the third cavity.

In another preferred embodiment, the rotor hub and the generator's rotor form a single body or an integral part.

The hoist support structure of a further preferred embodiment based on the wind turbine installation according to the second aspect can rotate with the rotor hub. The hoist support structure can have a first beam of circular cross-section and extending along axis A. This may offer the advantage that supporting the independent hoist is simplified independent of the angular position of the rotor hub.

A preferred embodiment comprises a rotor hub arranged to rotate about axis A and limiting a second cavity, wherein the rotor hub is mechanically connected with the generator's rotor, wherein the hoist support structure extends inside the first cavity and into the second cavity. This can help to move a component through the first and second cavity.

In another preferred embodiment, the hoist support structure is mechanically connected with an inner surface of the rotor hub, preferably such that the hoist support structure rotates with the rotor hub. This may serve to position or move a pitch motor, a pitch bearing and/or a pitch brake of the wind turbine installation in the third cavity, particularly when the pitch housing is positioned under the hoist support structure.

A preferred embodiment comprises a generator having a stator and a rotor, wherein the rotor hub is mechanically connected with the generator's rotor, the stator limiting a first cavity, preferably of essentially cylindrical shape, extending along axis A, wherein the hoist support structure extends inside the second cavity and into the first cavity. This can help to move a component through the first and second cavity.

In a further preferred embodiment, the pitch housing comprises a second platform arranged in the third cavity, wherein the hoist support structure is arranged between the second platform and the second cavity, wherein the hoist support structure is mechanically connected with the second platform and/or with an inner surface of the pitch housing. The second platform can have an opening arranged to accept an end of a rotor blade. The rope of a hoist supported by the hoist support structure can pass through the opening. A technician can use the second platform to stand on, when the rotor hub and the pitch housing are positioned such that the second platform is arranged essentially horizontally. Thereby, the maintenance or mounting of a component, particularly of a pitch motor, a pitch bearing and/or a pitch brake, can be simplified.

The hoist support structure of another preferred embodiment comprises at least a first beam arranged to support the independent hoist, such that the hoist can be moved or shifted along the first beam. The first beam can extend along a longitudinal axis L. A cross section of first beam can have the shape of an I, L, O, T, U, V, can be round, triangular or can be box shaped. The first beam can have a race for each of the rollers of the independent hoist. This first beam can make moving a component, particularly of a pitch motor, a pitch bearing and/or a pitch brake, easier.

The first beam of a preferred embodiment is curved, i.e. its longitudinal axis can be curved. The first beam can have the shape of a closed curve. The first beam can even be circular. Preferably, the first beam arranged inside the third cavity is curved. The curved beam and a first plane can extend in parallel. The curved beam's longitudinal axis can extend in the first plane. This first plane can be essentially perpendicular to a longitudinal axis B of the pitch housing, preferably axes A and B being perpendicular, or the first plane is arranged horizontally. This can help to position another component of the wind turbine installation.

Preferably, the hoist support structure comprises at least a second beam which is mechanically connected with the first beam and with the second platform, such that the first beam is spaced apart from the second platform. The hoist support structure can have three second beams. These can be spaced apart from each other when supporting a circular first beam. This can make moving or positioning a component, particularly of a pitch motor, a pitch bearing and/or a pitch brake, easier. This can also help to lift a rotor blade from the ground to be supported by the pitch housing.

A preferred embodiment comprises at least one hoist, arranged for lifting or lowering a load by means of a drum or lift-wheel around which rope or chain wraps. The hoist can have rollers to roll along the hoist support structure. The hoist is detachable from the hoist support structure. Preferably, the hoist is detached from the hoist support structure while the rotor hub rotates. The wind turbine installation can have a hoist for each of the hoist support structures. To facilitate the repair and/or replacement of one of the major components of wind turbine, there are several electrical or manual winches and/or chain hoists, having capacity ranging from 1000 kg to 3000 kg.

Another preferred embodiment comprises a nacelle, preferably arranged to hold the stator, limiting a fourth cavity, a fourth beam supported by the nacelle and arranged essentially horizontally, particularly mechanically connected with a ceiling of the nacelle, and a rotatable body arranged to guide a rope. The fourth beam can be a part of a fourth support structure extending in the fourth cavity. The rotatable body is supported by the fourth beam or fourth support structure such that the rotatable body can be shifted along the fourth beam also in the fourth cavity. This can help to move a pitch motor, a pitch bearing and/or a pitch brake or another component through the fourth cavity towards its destination.

Preferably, the rotatable body is a winch arranged to wind up the rope.

The rotatable body of an alternative embodiment is a pulley, a winch arranged to wind up the rope is mounted on a platform arranged inside the fourth cavity and arranged essentially horizontally. The rope extends from the winch and is guided by the pulley.

A preferred embodiment comprises a generator having a stator and a rotor, the generator's rotor being arranged to rotate about an axis A on, inside or about the stator, the rotor comprising two or more rotor segments, wherein a first of the rotor segments is arranged to be mechanically connected with a second of the rotor segments. Each of these rotor segments is lighter than a single piece rotor and the load on the hoist support structure is reduced. Thus, the generator' rotor and/or stator can be replaced or maintenance performed with the on-board hoists and hoist support structures. This reduces downtime and cost.

Preferably, each of the rotor segments has a concave inner segment wall arranged to face axis A when the first rotor segment is mechanically connected with the second rotor segment. The generator has at least a first race, the first race having two or more first liner segments, each arranged to be mechanically connected with one or more of the inner segment walls, wherein the first race is formed by inner circumferential surfaces of the first liner segments facing axis A. The first race is arranged to rotatably support the rotor. Each of these first liner segments is lighter than a single first liner and the load on the hoist support structure is reduced.

The bearing of the generator's rotor (main bearing) is usually very big and it has become larger in recent years. The entire turbine rotor can be supported and can rotate on the main bearing. In case of failure of the main bearing, a ground based higher capacity crane is required for replacing the main bearing. Repairing or refurbishment of the main bearing is usually not possible on top of the tower. In many cases, the entire nacelle needs to be taken to the ground to replace the main bearing. This can be very costly and cause longer downtimes. The rotor segments and/or the liner segments can help to reduce the cost of repair/maintenance and to reduce the downtime.

In a further preferred embodiment, the generator's rotor is rotatably supported by several first rollers, the rotational axes of which align with axis A. These first rollers are rotatably supported by or on the stator. The first rollers can be rotatably supported by brackets, which can be mechanically connected with the stator, particularly after lifting the stator from the ground into the nacelle. The generator's rotor can be supported axially by several second rollers, the rotational axes of which are arranged radially with respect to axis A. These second rollers are rotatably supported by or on the stator. At least some of these rollers can be replaced with the hoist support structure(s) with less effort and cost than an entire main bearing.

Alternatively, the first and second rollers are rotatably supported by or on the generator's rotor and the first race is supported by the stator.

According to a preferred embodiment, a brake disc, arranged to decelerate the generator's rotor and/or the rotor hub, has two or more brake disc segments, which need to be mechanically connected with each other to form the brake disc.

Another preferred embodiment comprises a rotor blade extending from the pitch housing, and arranged to rotate about its longitudinal axis C for pitching. The embodiment further comprises one or more of the following components:
a pitch bearing rotatably supporting the rotor blade relative to the pitch housing, wherein the pitch bearing has two or more bearing race segments, which form a bearing race of the pitch bearing when mechanically connected with each other, and/or
a pitch motor supported by the pitch housing, mechanically connected with the rotor blade and arranged to rotate the rotor blade about axis C, wherein the pitch motor has two or more pitch stator segments, which form a stator of the pitch motor when mechanically connected with each other, wherein the pitch motor has two or more pitch rotor segments, which form a rotor of the pitch motor when mechanically connected with each other, and/or
a pitch brake arranged to fix the rotor blade against rotation about axis C, the pitch brake having two or more brake disc segments, which form a brake disc of the pitch brake when mechanically connected with each other.

Because of the segments, which are lighter than single piece components, their maintenance or replacing the segments can be performed with the on-board hoists. This reduces downtime and cost.

The pitch motor comprises a pitch motor rotor and a pitch motor stator. In a preferred embodiment, the pitch motor rotor has a pitch motor rotor shaft and several permanent magnets or electrically excitable pole shoes, which can be mounted on the pitch motor rotor shaft directly or through mounting brackets. The pitch motor rotor shaft can be split into pitch motor rotor shaft segments. The pitch motor stator can be combined from several coil winding segments having conductors which are mounted on an inner surface of the pitch housing directly or through mounting brackets.

Alternatively, the pitch motor rotor has the pitch motor rotor shaft and several coil winding segments having conductors, which can be mounted on the pitch motor shaft directly or through mounting brackets. The pitch motor stator can have several permanent magnets or electrically excitable pole shoes which can be mounted on the on the pitch housing directly or through mounting brackets.

Segmentation of the pitch motor rotor and the pitch motor stator can be done in longitudinal direction or both in radial and longitudinal direction.

A further preferred embodiment comprises the nacelle, a tower supporting the nacelle rotatably. The tower limits a fifth cavity, which is essentially circular and extends along the nacelle's rotational axis. A (fifth) hoist support structure is arranged in the fifth cavity and is arranged to support an independent hoist. The hoist support structure comprises a curved beam. The hoist support structure can be mechanically connected with an inner surface of the tower inside the fifth cavity or with a third platform of and inside the tower.

### Exemplary embodiments

Further advantages become apparent to the skilled person from the following exemplary embodiments.

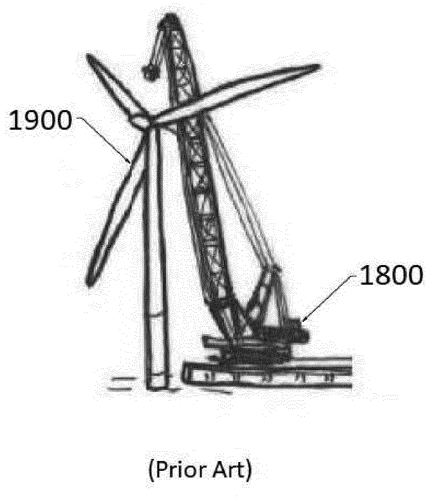

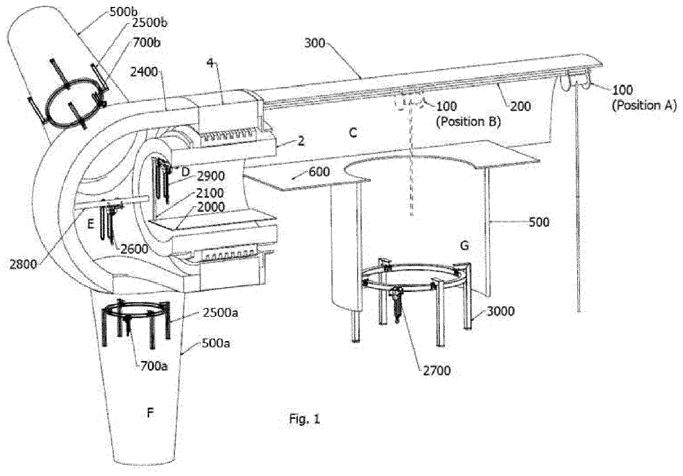

Figure 1 shows an exemplary wind turbine installation having a generator 2, 4. A stator 2 of the generator limits a first cavity D. A first platform 2000 extends in the first cavity of essentially cylindrical shape. A first hoist support structure 2100 is mechanically connected with the first platform. The hoist support structure supports a hoist 2900 which can be moved along a first beam of the hoist support structure. The stator is arranged inside a generator's rotor 4 and is held or supported by a nacelle 300 limiting a fourth cavity D.

The exemplary wind turbine installation is shown to have further hoist support structures 2800, 2500, 3000, 200, but the wind turbine installation need not have all of these hoist support structures simultaneously.

The generator's rotor 4 can rotate about the stator 2 and is mechanically connected with a rotor hub 2400. The rotor hub is arranged to rotate about an (rotational) axis A. The generator's rotor and the rotor hub can form a single body. The rotor hub limits a second cavity E. A second hoist support structure 2800 extends inside the second cavity. The second hoist support structure having a first beam extends from an inner surface of the rotor hub. The first beam aligns with the rotational axis A and can have a circular cross-section. This may help to support the independent hoist 2600 independent of the angular position of the rotor hub.

Three hollow pitch housings 500a, 500b each limiting a third cavity F extend from the rotor hub such that the second and third cavities form a common space. The pitch housings are arranged to support the rotor blade rotatably. The pitch housings can include a pitch bearing and/or a pitch motor. Only two of the pitch housings 500a, 500b are shown in figure 1. These include a third hoist support structure 2500a, 2500b extending in a respective third cavity. The third support structure comprises a circular first beam arranged to support an independent hoist 700a. Each of the pitch housings can include a second platform (not shown) mechanically connected with the third hoist support structure.

A fourth hoist support structure 200 has a fourth beam which is supported on the ceiling of the nacelle 300. A rotatable body 100 arranged to guide a rope is supported by the fourth beam and can be moved or shifted along the fourth beam. The fourth beam and the rotatable body are arranged above a nacelle platform 600. The nacelle platform 600 can have hole through which the rope guided by the rotatable body can descend into a tower 500 supporting the nacelle, see position B of the rotatable body. A component of the wind turbine installation can be lifted by the rope through the whole onto the nacelle platform. The fourth beam extends from the generator to the read end of the nacelle, such that the rotatable body can guide the rope to pass a rear hatch (not shown) of the nacelle, see position A of the rotatable body. In figure 1, the rotatable body is shown as a winch arranged to wind up the rope.

The nacelle is supported rotatably on the tower 500 which limits a fifth cavity G, which is essentially circular and extends along the nacelle's rotational axis. A fifth hoist support structure 3000 is arranged in the fifth cavity and is arranged to support an independent hoist 2700. The hoist support structure comprises a curved circular first beam. The hoist support structure can be mechanically connected with an inner surface of the tower inside the fifth cavity or with a third platform (not shown) of and inside the tower.

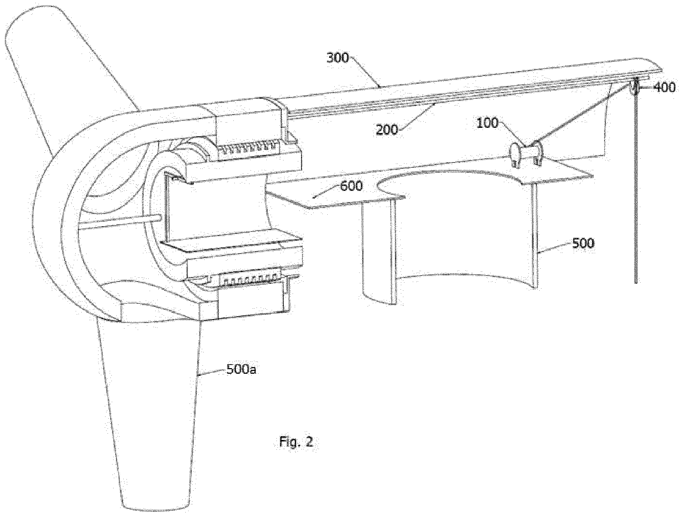

Figure 2 shows another exemplary wind turbine installation differing only slightly from that of figure 1. A winch 100 arranged to wind up a rope is mechanically connected with the nacelle platform 600. The fourth beam 200 supports a rotatable body 400 arranged to guide the rope. The rotatable body is positioned such that the rope passes the rear hatch (not shown) of the nacelle 300.

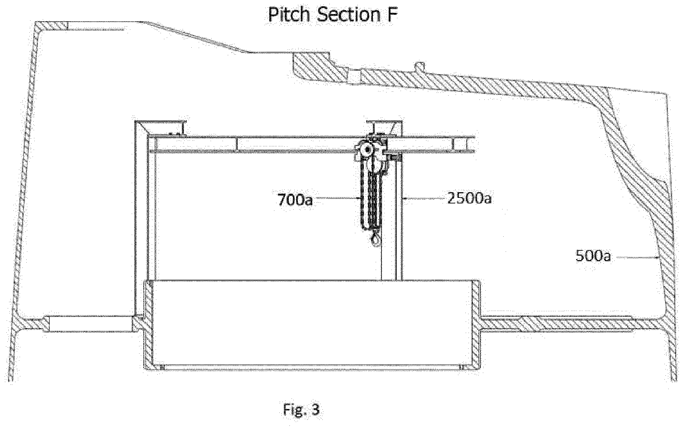

Figure 3 shows a detail of the pitch housing 500a in a cross section. The pitch housing limits the third cavity F and includes a second platform. The third hoist support structure 2500a has a circular first beam and several second beams are mechanically connected with the second platform and with the first beam. The hoist support structure supports hoist 700a which can be moved or shifted along the circular first beam. The second platform has a hole through which the hoist can lift or lower component of the wind turbine installation. The second platform can have a manhole to provide access to a radially outer section of the pitch housing.

The pitch motor (not shown in figure 3) comprises a pitch motor rotor and a pitch motor stator. Preferably, the pitch motor rotor has a pitch motor rotor shaft and several permanent magnets or electrically excitable pole shoes, which can be mounted on the pitch motor rotor shaft directly or through mounting brackets. The pitch motor rotor shaft can be split into pitch motor rotor shaft segments. The pitch motor stator can be combined from several coil winding segments having conductors which are mounted on an inner surface of the pitch housing directly or through mounting brackets. Alternatively, the pitch motor rotor has the pitch motor rotor shaft and several coil winding segments having conductors, which can be mounted on the pitch motor shaft directly or through mounting brackets. The pitch motor stator can have several permanent magnets or electrically excitable pole shoes which can be mounted on the on the pitch housing directly or through mounting brackets. Segmentation of the pitch motor rotor and the pitch motor stator can be done in longitudinal direction or both in radial and longitudinal direction. The second platform can have a tube shaped section extending radially which section can accept/support the pitch motor, a pitch bearing and/or a pitch brake.

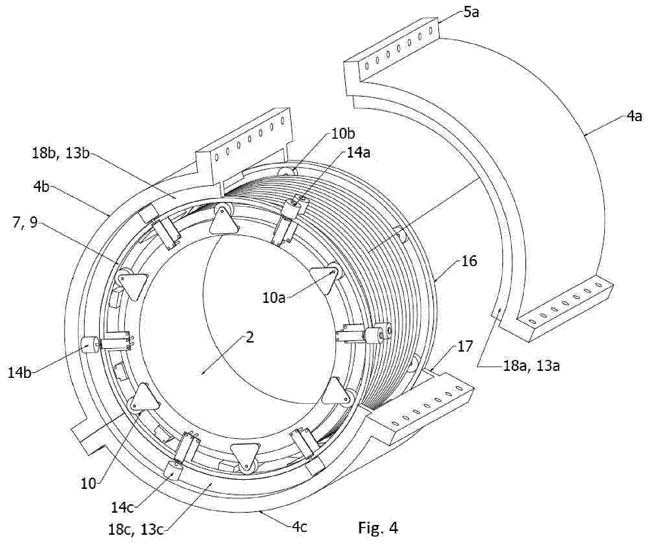

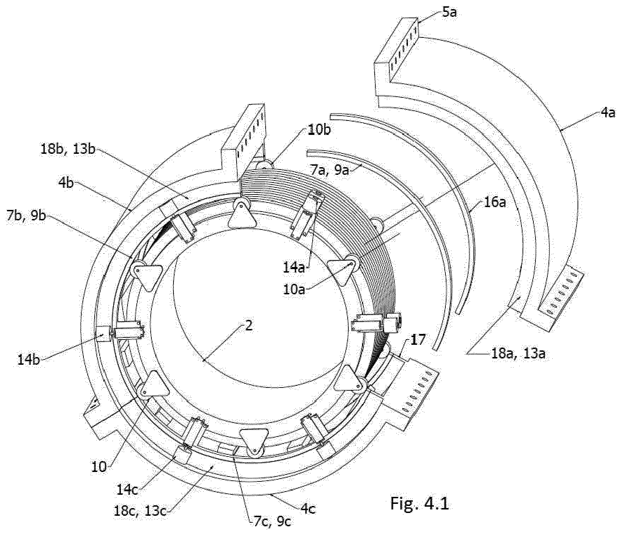

Figure 4 shows an exemplary generator having a stator 2 and the generator's rotor 4. The rotor has three rotor segments 4a, 4b, 4c. The first rotor segment 4a is mechanically connected with the second 4b and third 4c rotor segments. Each of the rotor segments has a concave inner segment wall 8b, 8c arranged to face the rotor's rotational axis A. Further, the rotor comprises a circumferential first race 9 which is arranged to face axis A when the first rotor segment is mechanically connected with the second and third rotor segment. The first race is arranged for first rollers 10 10a, which are rotatably supported by or on the stator 2 and the rotational axes of which can be parallel to axis A when rolling along the first race. The first race is radially closer to axis A than the concave inner segment walls. The first race is radially closer to the inner segment walls than to axis A. The first race can be an outer race.

Further, the rotor comprises a first liner ring 7, an inner circumferential surface of which forms the first race 9. The first liner ring is supported by aligning third ribs 18b, 18c of the rotor segments which extend from the respective inner segment wall 8b, 8c in a plane perpendicular to axis A. The stator 2 is arranged inside the rotor. The stator masks the inner segment walls of the rotor segments, masks fastening elements mechanically connected with the inner segment walls and magnetic elements held by the fastening elements. The first rollers 10a are rotatably supported by brackets which are mechanically connected with the stator. The rotor segments have flanges 5a extending from their convex outer segment walls 6a. Bolts can be fed through holes in the flanges to mechanically connect the rotor segments with each other. The third ribs also have two spaced apart third races 13a along which second rollers 14a can roll. The second of the third races is concealed by the third ribs. In combination, the third races and second rollers form a fixed bearing and can absorb a force imposed on the rotor along axis A. The second rollers 14a are rotatably supported by brackets which are mechanically connected with the stator. The first and second rollers are spaced along a circumference of the respective rotor segment.

The first rotor segment 4a is detached from the second 4b and third 4c rotor segments or is not yet mechanically connected with the these rotor segments 4b, 4c and is outside its intended position. This situation can occur while assembling the rotor or during its maintenance. Nevertheless, the liner ring 7 is supported by the third ribs 18b, 18c of the rotor segments 4b, 4c. Some of the first rollers 10a abut against the liner ring 7 and against its first race 9. The first rollers 10, 10a, 10b are held and supported by the stator 2 as are the second rollers 14a, 14b, 14c. The second roller 14a is positioned to roll along the third race 13a. The second rollers roll along two spaced apart third races 13a arranged on the third ribs 18a, 18b, 18c of the rotor segments 4a, 4b, 4c. The second of the third races is concealed by the third ribs. A second liner ring 16, along which one or more of the first rollers mechanically connected to the stator can roll, is spaced apart from the first liner ring. The second liner ring 16 is supported by second projections 17b, 17c extending from the inner segment wall of the respective rotor segment. The rotor segments can help to reduce the cost of repair/maintenance and to reduce the downtime.

Figure 4.1 shows an exemplary rotor slightly modified compared with figure 4. The first liner ring comprises three liner segments 7a, 7b, 7c. The rotor segments have third ribs 18a, 18b, 18c which extend from the inner segment wall of the respective rotor segment. The third ribs are arranged for supporting first liner segments 7a, 7b, 7c and two of the first liner segments 7b, 7c are mechanically connected with third ribs 18b, 18c. The first liner segment 7a, not yet connected with the third rib 18a, plus the other first liner segments 7b, 7c form the circumferential first race 9 facing axis A for the first rollers 10, 10a rotatably supported on the stator 2. The first race is radially closer to axis A than the concave inner segment walls. The first race is radially closer to the inner segment walls than to axis A.

The third ribs have two spaced apart third races 13a for second rollers 14a, 14b, 14c mounted on the stator 2, the rotational axes of which are essentially perpendicular to axis A. The second of the third races is concealed by the third ribs. In combination, the third races and second rollers can form a fixed bearing and may be able to absorb a force imposed on the rotor along axis A. Brackets rotatably support the first 10 and second rollers 14 and are mechanically connected with the stator. The rotor segments have flanges 5a for mechanically connecting with another of the rotor segments. The fastening elements connected to the respective inner segment wall and the magnetic elements held by the fastening elements are concealed by the stator.

The rotor further comprises three second liner segments 16a, 16b, 16b, each arranged to be mechanically connected with one of the inner segment walls. Second projections 17a, 17c extend from the inner segment wall of the respective rotor segment to support the second liner segments. The second liner segment 16a is not yet connected with the first rotor segment 4a. The second projections align when the first rotor segment is connected with the other rotor segments. The second race 20 is formed by the inner circumferential surfaces of the second liner segments facing axis A. The second liner segments are shaped to form a second liner ring, when mechanically connected with the inner segment walls and their projections. The second race 20 and the second liner segments are spaced apart from the first race 9 along axis A. Some of the first rollers 10b are mounted on the stator to roll along the second race and are spaced apart from other first rollers 10, 10a, which roll along the first race 9, along axis A.

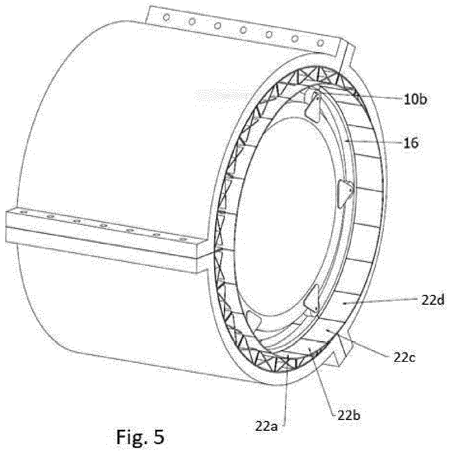

Figure 5 shows that several brake disc segments 22a-22d are mechanically connected with the respective inner segment wall 4. The brake disc segments can be mechanically connected with the first or second liner ring, particularly with an axial end face of the first or second liner ring. In combination the brake disc segments form a segmented brake disc which is arranged to engage with a calliper mechanically connected with a nacelle of the superordinate wind turbine installation. The segmented brake disc can engage with a rotor locking device which is mountable on the nacelle. This may simplify the maintenance of the wind turbine installation or can support to adopt an emergency mode, particularly when the wind velocity exceeds a maximum value.

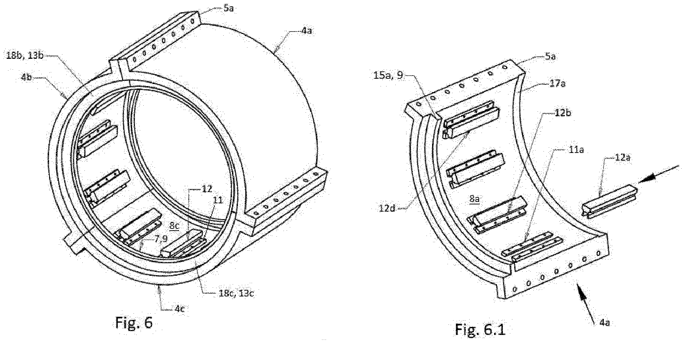

Figure 6 schematically shows the exemplary rotor of figure 4 having several rotor segments 4a, 4b, 4c and the respective explanations also apply. The stator and the first and second rollers are not shown. Fastening elements 11 of the third rotor segment 4c each have two guiding rails which are bolted to the inner segment wall 8c. Each of the magnetic elements 12 is held by two guiding rails 11, 11a. A first surface of the first guiding rail 11 and a second surface of the second guiding rail 11b, which surfaces are arranged to abut against the magnetic element, form an angle of more the 0° and less than 3°. The fastening element and the magnetic element can form a dovetail joint. The third rotor segment 4c has four fastening elements which are spaced along the inner segment wall 8c. The longitudinal axes of the magnetic elements align with the rotor's axis A. The first 4a and second 4b rotor segments are similarly designed. The first liner ring 7 and its first race 9 are well visible. The rotor segments also have the third ribs 18b, 18c which support the first liner ring and have two spaced apart third races 13a for the second rollers. The other of the third races is concealed by the third ribs.

Figure 6.1 schematically shows another exemplary curved first rotor segment 4a. A first rib 15a extends from the inner segment wall 8a in a plane perpendicular to axis A. The first rib, particularly its inner curved surface forms a first race 9 for first rollers, the rotational axes of which can be parallel to axis A when rolling along the first race. The third rib also forms two spaced apart third races 13a for second rollers, the second of the third races being concealed by the third rib. The first rotor segment has flanges 5a which extend from the convex outer segment wall of the rotor segment. Bolts can be fed through holes in the flanges to mechanically connect the first rotor segment with the other rotor segments. Four fastening elements 11, each having two rails, are mechanically connected with and are spaced along the inner segment wall 8a. Each of the fastening elements can hold one of the magnetic elements, such that the longitudinal axes of the magnetic elements are parallel to the rotor's axis A. The fastening elements and the magnetic elements form dovetail joints. In the figure, an arrow indicates that one of the magnetic elements 12a can be slid between the two rails of one of the fastening elements 11. The first rotor segment 4a has a second recess 17a arranged for supporting a second liner ring (not shown).

The magnetic elements 12, 12a, 12c can be electrically excitable pole shoes. In any single rotor segment 4a, 4b, 4c, each magnetic element or pole shoe is electrically connected back to back, forming series electrical connection, with magnetic elements of both sides in that particular rotor segment. Preferably, there is parallel electrical connection between the rotor segments 4a, 4b and 4c. However, electrical connection could be in series between the rotor segments 4a, 4b and 4c. Each magnetic element or pole shoe is easily and individually replaceable on top of the tower. Having this advantage, the magnetic element or pole shoe can be individually impregnated. Handling of the magnetic element or pole shoe can be done using smaller capacity winches and/or chain hoists. And there is no need of using ground based higher capacity crane to repair or refurbish the rotor of the generator.

The generator designs shown by figures 4 to 6.1 in combination with the first and/or fourth support structure help assembling the generator.

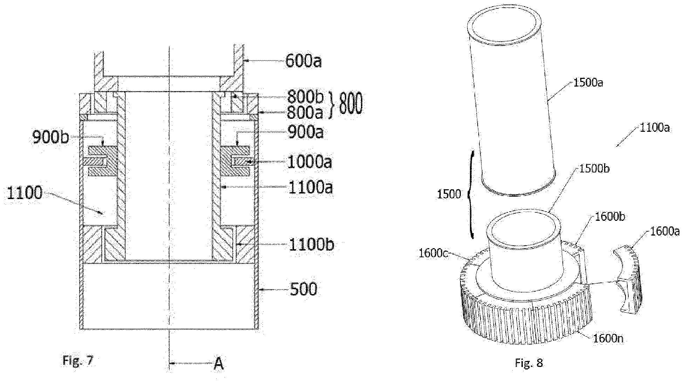

Figure 7 schematically shows a cross section through the tower top section 500, a yaw motor 1100, 1100a, 1100b, 1700, a yaw bearing 800, 800a, 800b and a yaw brake 900a, 900b, 1000a. A rotationally symmetric yaw motor rotor 1100a is mechanically connected with a section 600a of the nacelle (direct drive). A yaw motor stator 1100b is mechanically connected with the tower top section. The yaw brake disc 1100a is mechanically connected with the tower top section. Two yaw brake callipers 900a, 900b are mechanically connected with the yaw motor rotor. A stationary race 800a of the yaw bearing is mechanically connected with the tower top section. It rotatable race 800b is mechanically connected with section 600a of the nacelle.

Instead or rollers between the races 800a, 800b there could be axial and/or radial sliding pads between the races. The races 800a, 800b can have race segments, which have to be mechanically connected with each other to form the respective race.

As shown in fig. 7, the yaw brakes 900a, 900b, .... 900n can be mounted at different location on outer periphery of the direct yaw motor shaft 1500 with reference to the yaw motor shaft's rotational axis/tower axis. The yaw brakes can also be mounted at different locations in longitudinal direction with reference to the direct yaw motor rotational axis/tower axis. Further, the yaw brakes can also be mounted both at different locations radially and multiple location axially with reference to the direct yaw motor rotational axis/tower axis. Each row in longitudinal direction can have several yaw brakes which are mounted on outer periphery of yaw motor shaft 1500. The yaw brakes can directly mounted on the yaw motor shaft or can be mounted through yaw brake mounting brackets (not shown). In this case, the yaw brake disk 1100a can be mechanically or materially connected with the tower top section or the yaw brake disk can be mechanically connected with the tower top section 500 through yaw brake disk mounting bracket (not shown). The yaw brake disc could also be integrated with the tower top section.

Alternatively, the yaw brakes can be mounted directly on the tower top section 500 or can be mounted through yaw brake mounting brackets (not shown). In this case, the yaw brake disk can be mechanically or materially connected directly with the yaw motor shaft 1500 or through yaw brake disc mounting brackets (not shown). The yaw brake disc could also be integrated with the yaw motor shaft 1500.

Figure 8 schematically shows an exploded view of the yaw motor rotor 1100a. It comprises a motor shaft 1500 combined from several shaft segments 1500a, 1500b and several coil winding segments 1600a, 1600b, 1600c, ..., 1600n, which in combination form the winding of the rotor. The shaft segments are mechanically or materially connected with each other. The segmented design of the yaw motor rotor leads to parts or smaller weight, and a larger capacity crane can be avoided by the hoist support structure. Each coil winding segment can be impregnated separately.

The coil winding segments can be materially or mechanically connected directly on shaft segment 1500b. The coil winding segments 1600a, 1600b, 1600c, ..., 1600n could also be connected on the shaft segment through one or more mounting brackets (not shown). Each coil winding segment has several conductors (not shown). After connecting all coil winding segments with the shaft segment, the conductors of a second coil winding segment are electrically connected with the conductors of a first and third coil winding segments on both side of second coil winding segment. The material of the conductor could be preferably Copper or Aluminium. Preferably, electrical connection of the conductors is with a 3-phase 120° phase shift; either single layer or several layer lap or wave winding.

The yaw motor rotor 1000a can be made with permanent magnets or electrically excitable pole shoes which can be mounted to the yaw motor shaft. The yaw motor rotor can have mounting brackets connected with the motor shaft and holding the permanent magnets or electrically excitable pole shoes.

The designs of coil winding segments and shaft segments are such that these can be disconnected individually from shaft segment 1500b during repair. This design of the yaw motor rotor may offer one or more of the following advantages:
- reduced the manufacturing complexity by reducing the size of the individual segments
- simplified assembly process with other parts of the yaw motor
- reduced time for handling, manufacturing, assembly and maintenance
- In case of a failure, only the affected segment is required to be repaired or replaced
- Handing of the segment during maintenance can be done with smaller handling equipment
- The yaw motor rotor can be replaced or repaired on top of tower.

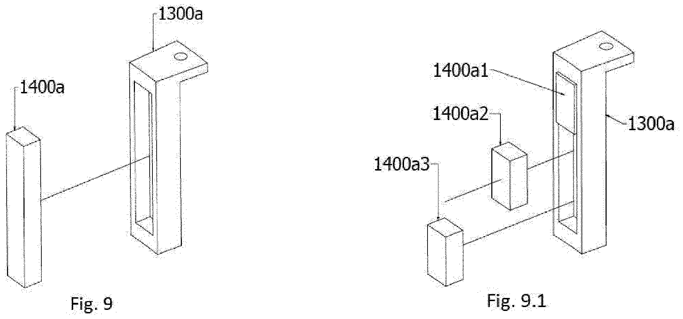

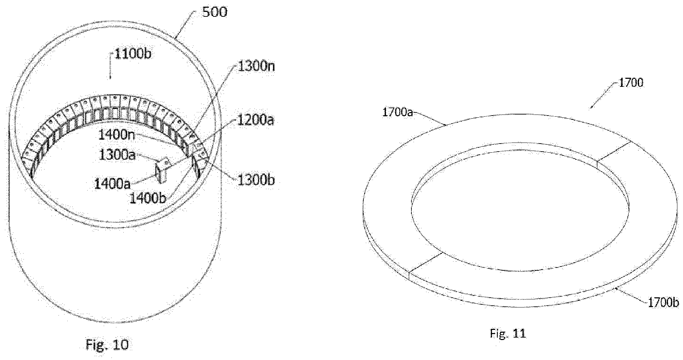

As shown in figure 10, the stator 1100b of an exemplary yaw motor comprises a mounting flange 1200a, several permanent magnets 1400a, 1400b, ..., 1400n and several magnet mounting brackets 1300a, 1300b, ..., 1300n. The magnet mounting brackets can be made from stainless steel or aluminium which are high strength materials to secure the magnets but are not affected by the magnetic field. The magnet mounting brackets can be made of a high strength material which is not affected by the magnetic field. First, each permanent magnet is mounted on a respective mounting bracket. Each mounting bracket 1300a, 1300b, ..., 1300n can hold at least one magnet (figure 9) but may hold several smaller magnets 1400a1, 1400a2, ..., 1400an (figure 9.1).

After that, as shown in figure 10, the magnet mounting brackets 1300a, 1300b, ..., 1300n each having one or more permanent magnets 1400a, 1400b, ..., 1400n are connected with the mounting flange 1200a, preferably mechanically. The mounting flange 1200a is mechanically or materially connected with the tower top segment 500.

As the permanent magnets 1400a, 1400b, ..., 1400n are parts of the stator 1100b of the direct drive yaw motor 1100, higher weight simple ferrite magnets can be used instead of using Neodymium Iron Boron or Samarium Cobalt or Alnico magnets. The availability of ferrite magnets is better and the cost is lower. Further, the permanent magnets are electrically excitable and electrically de-magnetisable.

The stator's 1100b design with several magnet mounting brackets 1300a, 1300b, ..., 1300n and several permanent magnets 1400a, 1400b, ..., 1400n may offer one or more of the following advantages:
- reduced manufacturing complexity by splitting the stator into several smaller size magnet mounting brackets, each holding one or more magnets
- reduced size of the equipment required for adhesive curing (oven) because of the reduced size of the magnets and magnet mounting brackets
- reduced time for handling, manufacturing, assembly and maintenance of the parts,
- In case of a failure, only the affected magnet needs to be repaired or replaced, which reduces the maintenance cost, as the bracket with the affected magnet can be easily separated from the mounting flange 1200a
- Handling of the magnet mounting bracket having a permanent magnet during maintenance can be done with smaller handling equipment and without a higher capacity crane
- The stator can be replaced or repaired on top of the tower without having to take the entire stator to the ground.

In the stator 1100b electrically excitable pole shoes (not shown) can be used. These pole shoes are individually mounted directly on the flange 1200a or can be mounted on flange through pole shoe mounting brackets (not shown). The pole shoes are electrically connected back to back with each other. In case of any failure, the affected pole shoes can be replaced or repaired individually on top of the tower without a ground base crane.

Segmentation of the yaw motor rotor 1100a and the stator 1100b could also be done in longitudinal direction or both in radial and longitudinal direction.

The yaw motor rotor 1100a can be made with permanent magnets or electrically excitable pole shoes which can be mounted to the motor shaft. The yaw motor rotor 1100a can have mounting brackets connected with the motor shaft and holding the permanent magnets or electrically excitable pole shoes. In this arrangement, the stator 1100b is made by using several coil winding segments 1600a, 1600b, 1600c, ..., 1600n having conductors. The several coil winding segments are directly mounted on the tower top segment 500. Alternatively, the several coil winding segments can also be mounted on the tower top segment through mounting brackets.

As shown in fig. 11, an exemplary brake disc 1700 is split in several brake disc segments 1700a, 1700b. Alternatively, the brake disc can also be produced and mounted as a single part.

## Claims

1. Wind turbine installation comprising
a generator having a stator (2) and a rotor (4), the generator's rotor (4) being arranged to rotate about an axis A on the stator, the stator limiting a first cavity (D) extending along axis A,
a first platform (2000) extending inside the first cavity, wherein an outer surface of the first platform extends essentially in parallel with axis A or is arranged horizontally,
a hoist support structure (2100) arranged to support an independent hoist, wherein the hoist support structure is mechanically connected with the first platform and/or with the stator, and extends inside the first cavity.

2. Wind turbine installation, preferably according to claim 1, comprising
a rotor hub (2400) arranged to rotate about an axis A and limiting a second cavity (E),
a hoist support structure (2800) arranged to support an independent hoist, wherein the hoist support structure extends inside the second cavity (E) essentially in parallel with axis A.

3. Wind turbine installation, preferably according to one of the preceding claims, comprising
a rotor hub (2400) arranged to rotate about an axis A and limiting a second cavity (E),
a pitch housing (500) limiting a third cavity (F) and extending from the rotor hub, such that the second and third cavities form a common space,
a hoist support structure (2500) arranged to support an independent hoist, wherein the hoist support structure extends inside the third cavity (F).

4. Wind turbine installation according to claim 1, further comprising a rotor hub (2400) arranged to rotate about axis A and limiting a second cavity (E), wherein the rotor hub is mechanically connected with the generator's rotor, wherein the hoist support structure extends inside the first cavity and into the second cavity.

5. Wind turbine installation according to claim 2, wherein the hoist support structure is mechanically connected with an inner surface of the rotor hub, preferably such that the hoist support structure rotates with the rotor hub.

6. Wind turbine installation according one of claims 2 and 5, further comprising a generator having a stator (2) and a rotor (4), wherein the rotor hub is mechanically connected with the generator's rotor, the stator limiting a first cavity (D) extending along axis A, wherein the hoist support structure extends inside the second cavity and into the first cavity.

7. Wind turbine installation according to claim 3, wherein the pitch housing comprises a second platform arranged in the third cavity, wherein the hoist support structure is arranged between the second platform and the second cavity, wherein the hoist support structure is mechanically connected with the second platform and/or with an inner surface of the pitch housing.

8. Wind turbine installation according to one of the preceding claims, wherein the hoist support structure comprises at least a first beam arranged to support the independent hoist, such that the hoist can be moved or shifted along the first beam.

9. Wind turbine installation according to claim 7, wherein the first beam is curved, preferably in a first plane, preferably which is essentially perpendicular to a longitudinal axis B of the pitch housing or is arranged horizontally.

10. Wind turbine installation according to claim 7 or 9, wherein the hoist support structure comprises at least a second beam which is mechanically connected with the first beam and with the second platform, such that the first beam is spaced apart from the second platform.

11. Wind turbine installation according to one of the preceding claims, further comprising at least one hoist (700, 2800, 2900) which is detachable from the hoist support structure, preferably which is detached from the hoist support structure while the rotor hub rotates.

12. Wind turbine installation according to one of the preceding claims, further comprising
a nacelle (300) limiting a fourth cavity (C), preferably arranged to hold the stator
a fourth beam (200) supported by the nacelle, particularly mechanically connected with a ceiling of the nacelle,
a rotatable body (100, 400) arranged to guide a rope, the rotatable body being supported by the fourth beam such that the rotatable body can be shifted along the fourth beam also in the fourth cavity.

13. Wind turbine installation according to claim 12, wherein the rotatable body is a winch arranged to wind up the rope.

14. Wind turbine installation according to claim 12, wherein
the rotatable body is a pulley,
a winch arranged to wind up the rope is mounted on a nacelle platform (600) arranged inside the fourth cavity and arranged essentially horizontally,
the rope extends from the winch and is guided by the pulley.

15. Wind turbine installation according to one of the preceding claims, comprising a generator having a stator (2) and a rotor (4), the generator's rotor (4) being arranged to rotate about an axis A on the stator, the rotor comprising two or more rotor segments (4a, 4b, 4c), wherein a first (4a) of the rotor segments is arranged to be mechanically connected with a second (4b) of the rotor segments.

16. Wind turbine installation according to claim 15, wherein each of the rotor segments has a concave inner segment wall (8a, 8b) arranged to face axis A when the first rotor segment is mechanically connected with the second rotor segment, wherein the generator has at least a first race (9), the first race having two or more first liner segments (7a, 7b, 7c), each arranged to be mechanically connected with one or more of the inner segment walls, wherein the first race is formed by inner circumferential surfaces of the first liner segments facing axis A.

17. Wind turbine installation according to one of the preceding claims, comprising a rotor blade extending from the pitch housing, and arranged to rotate about its longitudinal axis C, and comprising one or more of the following components:
a pitch bearing rotatably supporting the rotor blade relative to the pitch housing, wherein the pitch bearing has two or more bearing race segments, which form a bearing race of the pitch bearing when mechanically connected with each other, and/or
a pitch motor supported by the pitch housing, mechanically connected with the rotor blade and arranged to rotate the rotor blade about axis C, wherein the pitch motor has two or more pitch stator segments, which form a stator of the pitch motor when mechanically connected with each other, wherein the pitch motor has two or more pitch rotor segments, which form a rotor of the pitch motor when mechanically connected with each other, and/or
a pitch brake arranged to fix the rotor blade against rotation about axis C, the pitch brake having two or more brake disc segments, which form a brake disc of the pitch brake when mechanically connected with each other.
